Europäisches Patentamt

(19) European Patent Office

Office européen des brevets

(11) Publication number: **0 012 629**
**A1**

(12) · **EUROPEAN PATENT APPLICATION**

(21) Application number: **79302940.6**

(22) Date of filing: **18.12.79**

(51) Int. Cl.³: **H 01 F 37/02,** H 01 F 3/14, H 01 F 31/06, H 04 B 15/02, H 01 F 27/24

(30) Priority: **19.12.78 JP 175622/78**

(43) Date of publication of application: **25.06.80 Bulletin 80/13**

(84) Designated Contracting States: **DE FR GB**

(71) Applicant: **FUJITSU FANUC LIMITED, 5-1, Asahigaoka, 3-chome, Hino-shi, Tokyo 191 (JP)**

(72) Inventor: **Fujioka, Yoshiki, 3-27, Tamadaira Hino-shi, Tokyo 191 (JP)**

(74) Representative: **Bedggood, Guy Stuart et al, Haseltine Lake & Co. Hazlitt House 28 Southampton Buildings Chancery Lane, London WC2A 1AT (GB)**

(54) **Electrical reactors.**

(57) An electrical reactor has a core (11), for example composed of silicon steel plates, forming a closed magnetic circuit including a gap (14). A by-pass member (20) across the gap (14) forms a magnetic by-pass path around the gap (14). The by-pass member (14) may be a silicon steel plate with its plane parallel to the plane of the plates forming the core. A coil (15, 17, 18) is wound on the core (11).

The inductance of the reactor depends upon magnetic saturation of the by-pass member (20). When current in the coil is small reactor inductance is large because the by-pass member (20) does not saturate, but when current in the coil is large the by-pass member (20) saturates and reactor inductance is reduced.

The reactor can be employed for blocking leakage of noise generated at the time of commutation in a thyristor controlled converter.

ELECTRICAL REACTORS

The present invention relates to electrical reactors.

Electrical reactors are employed for example for preventing leakage of noise generated during commutation in a thyristor-controlled converter.

The speed of a DC motor can be varied by changing voltage applied thereto, and reversal of the polarity of the applied voltage can cause the motor to operate in a reverse direction. To decrease motor speed over a short period of time a braking current is caused to flow into the motor armature by allowing the armature voltage to exceed the applied voltage.

To provide appropriate applied voltages for motor speed and direction control, a thyristor-controlled three-phase full-wave reversible bridge is ordinarily employed for driving a DC motor which is required to rotate at a variety of speeds and in both forward and reverse directions. Such a thyristor-controlled three-phase full-wave reversible bridge is constructed by connecting two oppositely poled thyristor-controlled converters in parallel with one another, one of which converters is a forward or "positive" converter for supplying the armature of the DC motor with a forward current, and the other of which converters is a reverse or "negative" converter for passing a reverse current through the armature. Each of the positive and negative converters is connected in parallel with the armature of the motor and comprises six thyristors. The DC motor can be made to rotate in the forward direction at a prescribed speed by firing each thyristor in the positive converter at a suitable timing to allow this converter to supply the armature with a forward current, whereas the motor can be made to rotate in the reverse direction at a prescribed speed by firing each thyristor in the negative converter at a suitable timing to allow this converter to supply the armature with a reverse current. A rapid reduction in the speed of the motor can be achieved when a braking current is passed through the armature by changing the operating mode of the converters from a power rectification mode to a power inversion mode.

In a thyristor-controlled three-phase full-wave reversible bridge as described above a commutation overlap phenomenon occurring at the time of thyristor commutation can give rise to a large overshoot in phase current when a phase current begins to flow into a fired thyristor or when a phase current is narrowed or reduced to zero in a thyristor which is to be turned off. This overlap phenomenon can also cause excessive overshoot pulses to be superimposed on phase voltage on the input side of the thyristor-controlled three-phase full-wave reversible bridge. These pulses superimposed on the phase current and phase voltage have a steep rate of change and can therefore be a source of a great quantity of noise which can be transmitted from the thyristor-controlled three-phase full-wave reversible bridge to an external point via an input line and which can then "leak" into associated circuitry such as a phase control circuit for controlling the firing of the thyristors.

Ordinarily, a phase control circuit is designed such that a reference point for phase control is taken as the point where the input voltage waveform crosses the zero level. Accordingly, if the abovesaid noise, which includes pulses of the type that cross the zero level, should leak and be introduced into the phase control circuit for the thyristors or an adjacent phase control circuit for another DC motor, the result will be faulty motor operation owing to disturbance in the timing at which firing pulses fire the thyristors.

In an effort to prevent faulty motor operation it is conventional practice to inhibit the leakage of noise by inserting reactors on the input side of the thyristor-controlled three-phase full-wave reversible bridge. However, in order to achieve complete elimination of noise it is necessary for the reactors to have an extremely large inductance, a factor which has increased the size and raised the cost of the reactors. Handling difficulties arise if the reactors are large in size since they cannot then be accommodated in a case housing the thyristor-controlled three-phase full-wave reversible bridge.

According to the present invention there is provided an electrical reactor having a core and a coil wound on the core, characterised in that the core has a gap therein and forms a closed magnetic circuit including the gap, there being a member disposed across the gap to provide a by-pass magnetic path around the gap.

The present invention can thus provide a compact reactor which is capable of inhibiting the leakage of noise developed in a thyristor-controlled three-phase full-wave reversible bridge at the time of commutation.

The present invention can further provide a reactor capable of preventing noise developed in a thyristor-controlled three-wave reversible bridge at the time of commutation from leaking into peripheral equipment such as a phase control circuit, thereby allowing the generation of firing pulses to be timed normally so that an motor will rotate in a correct manner.

Moreover, the present invention can provide a reactor which is compact and light in weight, capable of being accommodated in a case that houses a thyristor-controlled three-phase full-wave reversible bridge and low in cost.

The present invention provides a reactor the inductance of which increases for small phase currents and decreases for large phase currents.

Reference will now be made, by way of example, to the accompanying drawings, in which:-

Fig. 1 is a synoptic block diagram of DC motor drive circuitry which employs a thyristor-controlled three-phase full-wave reversible bridge;

Fig. 2 is a waveform diagram showing phase currents associated with the arrangement of Fig. 1;

Fig. 3 is a waveform diagram showing phase voltage distortion in a power rectification mode of operation;

Fig. 4 is a waveform diagram showing phase voltage distortion in a power inversion mode of operation;

Fig. 5 is a perspective view of a reactor embodying the present invention;

Fig. 6 is a diagram for assistance in description of the action of a reactor embodying the present invention;

Fig. 7 is a graph showing the inductance v. phase current characteristics of a reactor embodying the present invention;

Fig. 8 is a waveform diagram showing phase current and phase voltage in a case in which a reactor embodying the invention is employed; and

Fig. 9 is a perspective view of another reactor embodying the present invention.

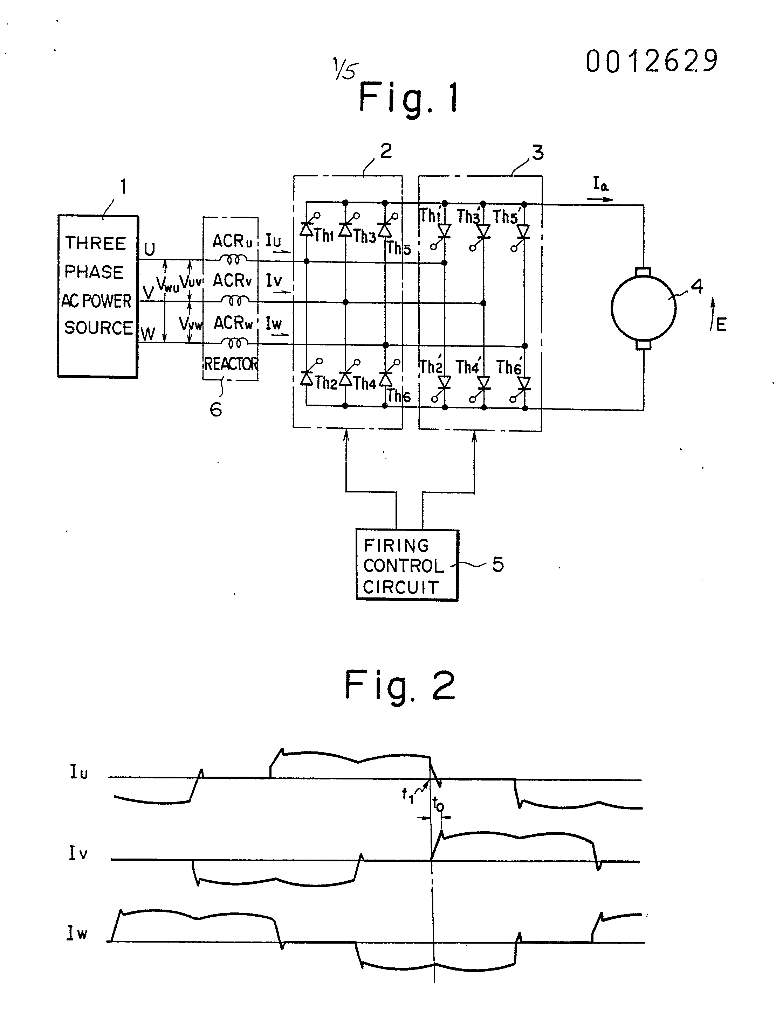

Reference will first be made to the synoptic block diagram of Fig. 1 which shows DC motor drive circuitry utilizing a thyristor-controlled three-phase full-wave reversible bridge. The circuitry includes a three-phase AC power source 1, a forward or "positive" thyristor-controlled converter 2 comprising six thyristors $Th_1$ to $Th_6$ whose firing sequence and firing angle are, for example, controlled in a power rectification mode of operation to convert three-phase AC voltage $V_{UV}$, $V_{VW}$, $V_{WU}$ into a DC voltage of a prescribed value and supply a DC motor with a forward current to rotate the motor in the forward direction at a prescribed speed, and a reverse or "negative" thyristor-controlled converter 3 comprising six thyristors $Th_1'$ to $Th_6'$ in the same fashion as converter 2, whose firing sequence and firing angle are, for example, controlled in a power rectification mode of operation to convert the three-phase AC voltage $V_{UV}$, $V_{VW}$, $V_{WU}$ into DC voltage of a prescribed value and supply the DC motor with a reverse current to rotate the motor in a reverse direction at a prescribed speed. The power rectification mode mentioned above is that operating mode in which the positive converter 2 or negative converter 3 converts the three-phase AC voltage $V_{UV}$, $V_{VW}$, $V_{WU}$ into DC voltage and supplies this DC voltage to the DC motor, while a power inversion mode is that operating mode in which the DC motor armature voltage (back electromotive force) Ea is converted into three-phase AC voltage and fed back to the power source 1. A change-over in the operating mode from the power rectification mode to the power inversion mode takes place when the speed of the DC motor is reduced by a braking current which is caused to flow into the armature.

Figure 1 also shows a DC motor 4 and a firing phase control circuit 5 for controlling the firing phase of the thyristors $Th_1$ to $Th_6$ and $Th_1'$ to $Th_6'$ that constitute the positive and negative converters 2 and 3, respectively. The firing phase control circuit 5 effects control of the firing phase of the thyristors by adopting as a reference point the timing at which the three-phase AC voltage crosses the zero level.

Designated generally at 6 in Figure 1 is a noise absorber, comprising reactors $ACR_U$, $ACR_V$, $ACR_W$ inserted in each input phase power line U, V, W before the input side of the converters 2 and 3, which is adapted to absorb the noise generated in each power line when the thyristors commute.

Phase currents $I_U$, $I_V$, $I_W$ having waveforms as shown in Fig. 2 will flow in the respective U-, V- and W-phase lines if, with thyristors $Th_1$, $Th_6$ in positive converter 2 already on, the thyristors are then fired in the following sequence maintaining a phase difference of 60 degrees:-

at time $t_1$, with thyristors $Th_1$, $Th_6$ on,

$Th_3$: on ($Th_1$: off)$\rightarrow Th_2$: on ($Th_6$: off)$\rightarrow$
$Th_5$: on ($Th_3$: off)$\rightarrow Th_4$: on ($Th_2$: off)$\rightarrow Th_1$ : on
($Th_5$: off)$\rightarrow Th_6$: on ($Th_4$: off).

In other words, if the firing of the thyristors is controlled in accordance with the above sequence while maintaining a phase difference of 60 degrees, thyristors will be turned on in pairs forming six different conditions or combinations, namely (1) $Th_1$, $Th_6$ turned on, (2) $Th_3$, $Th_6$ turned on, (3) $Th_3$, $Th_2$ turned on, (4) $Th_5$, $Th_2$ turned on, (5) $Th_5$, $Th_4$ turned on, and (6) $Th_1$, $Th_4$ turned on, which six conditions occur in one period of the AC voltage. This gives rise to the phase currents $I_U$, $I_V$, $I_W$ having the shapes depicted in Fig. 2.

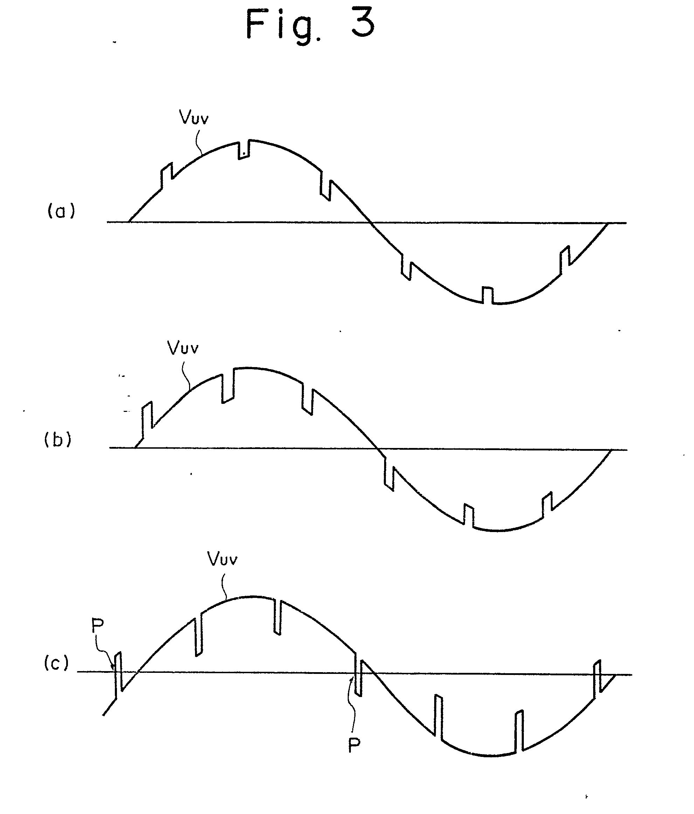

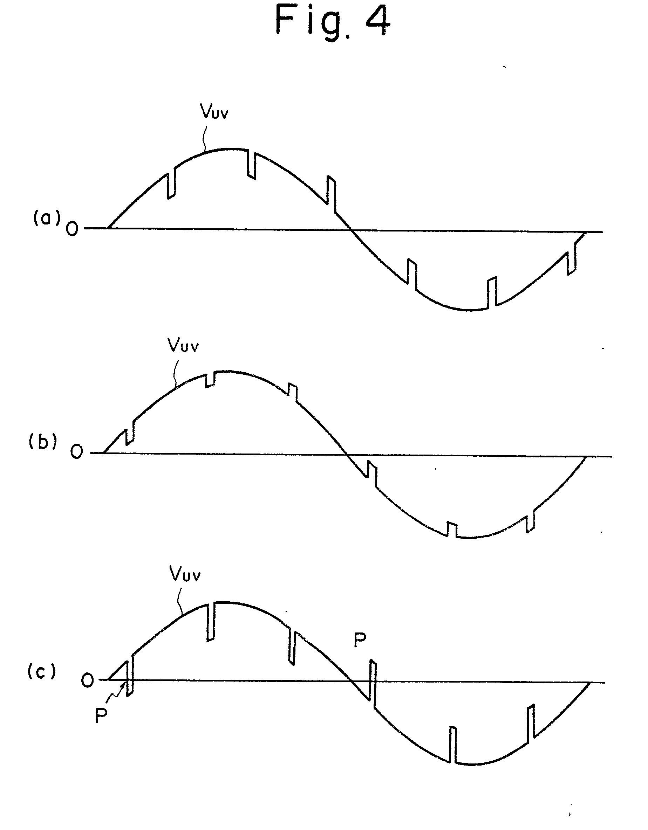

A commutation overlap phenomenon occurs in the above thyristor-controlled converter at the time of thyristor commutation. For example, if thyristor $Th_3$ is turned on (time $t_1$) in a situation where thyristors $Th_1$, $Th_6$ are already on, thyristor $Th_1$ will be reversed biased and turned off or extinguished in a natural manner. According to the manner in which this natural extinction occurs, phase current $I_U$ begins to decrease and simultaneously phase current $I_V$ begins to increase. Then, at a point in time which follows firing of $Th_3$ by a prescribed time period $t_O$, phase current $I_U$ becomes zero so that armature current Ia is determined solely by phase current $I_V$ from that point onward. The phenomenon wherein the two phase currents $I_U$, $I_V$ flow simultaneously for a certain time period $t_O$ following firing is referred to as commutation overlap. This phenomenon gives rise to a large overshoot when the phase currents $I_U$, $I_V$, $I_W$ begin to flow and when they converge to zero, and also causes the phase voltages $V_{UV}$, $V_{VW}$, $V_{WU}$ on the input side to experience the superposition of pulses which have a large overshoot. The distortion which this causes in the phase voltages is illustrated in Figs. 3 and 4. More specifically, the waveforms (a), (b) and (c) in Figs. 3 and 4 illustrate the shape of the phase voltage $V_{UV}$ for low, intermediate and high DC motor speeds, respectively, when a thyristor-controlled converter is operating in a power rectification mode (Fig. 3) and in a power inversion mode (Fig. 4).

It is obvious from Figs. 2 to 4 that the pulse components superimposed on the phase voltages and phase currents have a steep rate of increase and therefore constitute a principal source of noise which can leak into associated circuitry by transmission from the converter via input lines. The firing phase control circuit 5 for the thyristor-control converter usually is designed such that the reference point for firing phase control operation is the point at which the input voltage waveform crosses the zero level. Hence, if noise including a pulse of a type that crosses the zero level as at points P in waveforms (c) in Figs. 3 and 4 leaks into the firing phase control circuit 5 or into a neighboring DC motor phase control circuit, a motor will operate incorrectly because the timing at which the thyristors are fired by the firing pulses will be disrupted.

A reactor 6 is inserted on the input side of the thyristor-controlled converters 2, 3 as shown in Fig. 1 in order to improve upon the abovementioned shortcoming by blocking noise which is generated. Since complete elimination of noise requires a reactor of an extremely large inductance, such a reactor has not only been expensive but also of large size and therefore not suitable for accommodation in the case that houses the converters. This has obviously posed handling difficulties.

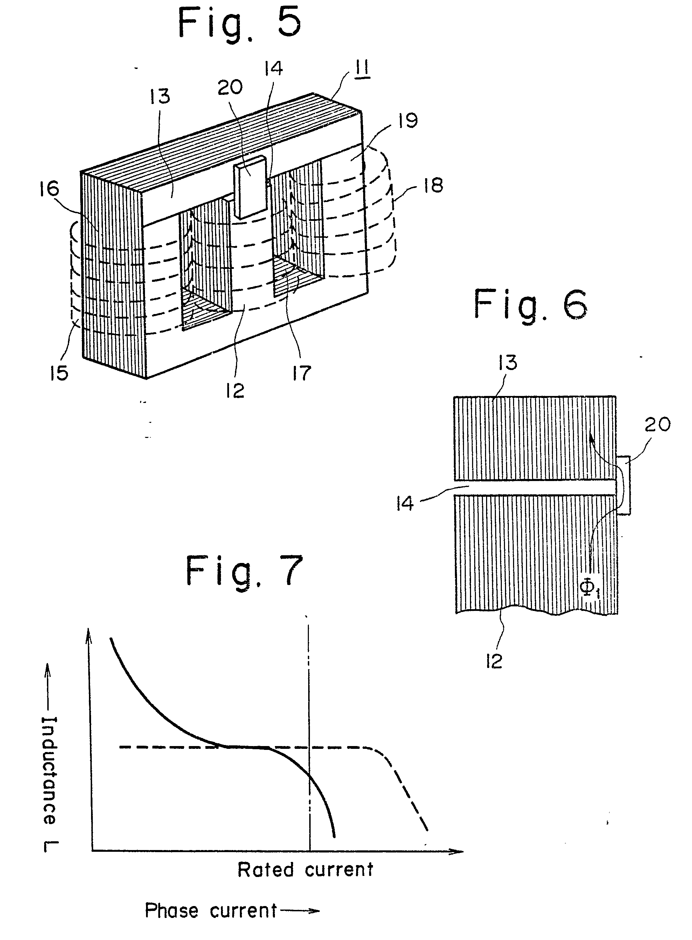

A reactor embodying the present invention is shown in perspective in Fig. 5. The reactor includes a core 11 formed by laminating a plurality of silicon steel plates. The core 11 has three leg portions 16, 12 and 19 and a yoke portion 13. A gap 14 is defined in the middle of the core between leg portion 12 and yoke portion 13. The reactor further includes coils 15, 17 and 18 wound around respective leg portions 16, 12 and 19.

-8-

Bonded to the leg portion 12 and yoke portion 13 across one end of gap 14 is a by-pass plate 20 the plane of which is parallel with the planes of silicon steel plates which are laminated to form the core. The by-pass plate 20 consists of the same silicon steel that is used to construct the core.

The reactor constructed as described above functions in the following manner. When a current which flows into coils 15, 17 and 18 is small, a magnetic flux $\phi_1$ shown in Fig. 6 which passes through the leg portion 12 flows from the leg portion in the direction of the yoke portion 13 through the by-pass plate 20 which has a small magnetic resistance. Since the magnetic flux passing through the leg portion 12 and by-pass plate 20 is small because the current flowing in the coils is small, the by-pass plate is not yet magnetically saturated. The coil inductance L (which is equal to $d\phi/di$) therefore assumes a large value. Gradually increasing the flow of current through the coils increases the flux through the by-pass plate 20 and causes the plate to start saturating so that the flux in the leg portion 12 starts to pass through the gap 14. If the current in the coils assumes a large value almost all the flux in the leg portion 12 passes through gap 14, which has a high magnetic resistance. The result is a decrease in the coil inductance L. This is shown graphically in Fig. 7 in which the curve represents the change in inductance L as the phase current flowing through the coils is varied. The solid line illustrates the characteristic curve of the reactor embodying this invention, and the broken line illustrates the characteristic curve of a prior art reactor.

It is to be noted that the by-pass plate 20 bonded across gap 14 must lie in parallel with the laminated silicon steel plates as mentioned above. Bonding the by-pass plate at right angles to the laminated silicon steel plates would give rise to eddy currents that would increase the loss within the by-pass plate and reduce its effectiveness.

A reactor constructed as described above exhibits the following functions and effects if inserted on the input side of a thyristor-controlled converter.

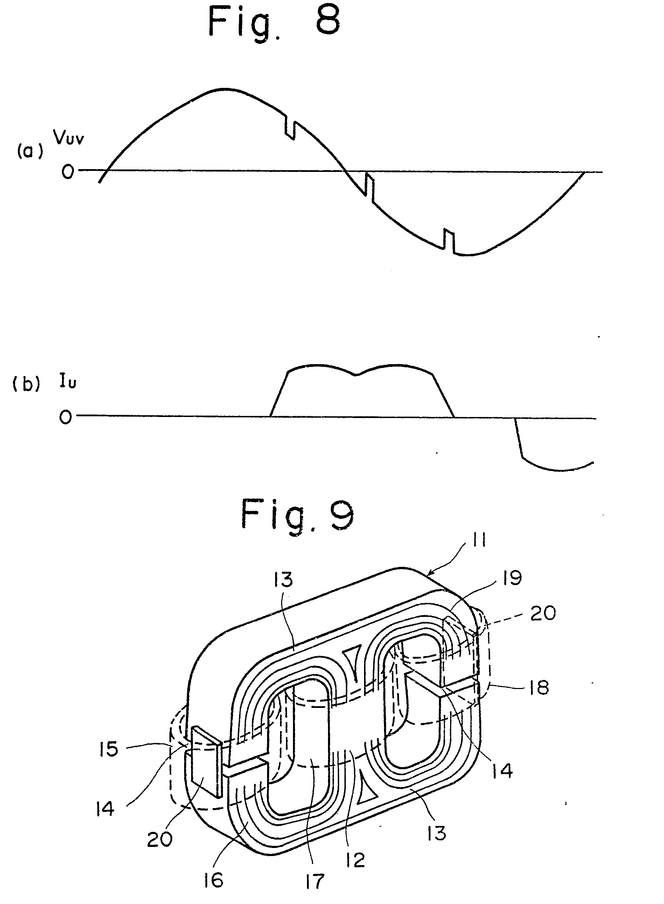

As discussed above, a large overshoot (Fig. 2) develops in the phase current flowing in each phase line of the converters when the phase current begins to flow and when it is interrupted. In other words, the overshoot which is a source of noise occurs when the current flowing through each phase line has a small value. Since the reactor shown in Fig. 5 has a large inductance in the low current region, inserting this reactor on the input side of thyristor-controlled converters 2, 3 suppresses the overshoot in the phase voltage $V_{UV}$ and phase current $I_U$ owing to the greater reactor impedance, as shown in Fig. 8, so that the phase current flowing into the thyristor-controlled converters 2, 3 will have a gently-sloping shape from which almost all the overshoot has been removed. In addition, there is also a reduction in the peak value of the pulses superimposed upon the voltage across the input lines. The overall result is a decrease in the noise component. When the phase current rises to its steady state there is a corresponding decrease in impedance so that the installation of the reactor does not overly impede the flow of phase current.

While the present invention has been illustrated and described with respect to a reactor having a core of laminated silicon steel plates, the invention can also be embodied by an arrangement which uses a cut core as depicted by the perspective view of Fig. 9. Like reference numerals denote portions which are identical with those encountered in the foregoing embodiment.

In embodiments of the present invention, as described above, the reactor impedance assumes a large value as long as the phase current flowing into the input side of the converters is small, but the impedance drops when the phase current reaches its steady-state value. Such a reactor enables the blockage of noise components generated during the rise and decay of the phase current, and therefore prevents noise from leaking into associated circuitry from the input side of the converters. A reactor embodying the present invention, even if made small in size, offers an impedance to low currents which is the same as that of conventional reactors. It can therefore be housed in a case together with the converters, while its small size and light weight lowers cost.

It is obvious that reactors embodying the present invention can be applied to thyristor-controlled converters connected to loads other than a DC motors, and can have wider application than thyristor-controlled converters.

Thus, there has been described a reactor adapted to block leakage of noise generated at the time of commutation in a thyristor-controlled converter. The reactor includes a core for forming a closed magnetic circuit and, for example, composed of a silicon steel plate, a coil wrapped around the core, a gap formed by cutting away a portion of the core, and a by-pass plate disposed across the gap to form a by-pass path for the magnetic circuit. The by-pass plate, which comprises a silicon steel plate, is disposed across the gap in such a manner that the plane thereof will lie in parallel with the planes of the silicon steel plates which form the core. The inductance of the reactor depends upon the magnetic saturation of the by-pass plate. Hence, when a current flowing through the coil is small the reactor inductance assumes a large value because the by-pass plate cannot saturate. However, a large flow of current into the coil does cause the by-pass plate to saturate and therefore reduces the reactor inductance.

CLAIMS

1. An electrical reactor having a core and a coil wound on the core, characterised in that the core has a gap therein and forms a closed magnetic circuit including the gap, there being a member disposed across the gap to provide a by-pass magnetic path around the gap.

2. A reactor as claimed in claim 1, wherein the core is composed of silicon steel plates, the by-pass magnetic path being formed by disposing a by-pass plate, which comprises a silicon steel plate, across said gap, the plane of said by-pass plate across the gap being parallel to the planes of the silicon steel plates that form the core.

3. A reactor as claimed in claim 1 or 2, wherein the core is formed by laminating a plurality of silicon steel plates.

4. A reactor as claimed in claim 1 or 2, wherein the core is a cut core.

5. A reactor as claimed in claim 2 or 3, wherein the core has a three-legged main core portion of a plurality of E-shaped silicon steel plates laminated together, and a yoke portion of a plurality of elongate silicon steel plates laminated together and disposed across the free ends of the legs of the main core portion.

6. A reactor as claimed in any preceding claim, for blocking leakage of noise which is generated at the time of commutation in a thyristor-controlled converter.

7. A thyristor-controlled circuit including a reactor as claimed in any preceding claim for blocking the leakage of noise.

8. A thyristor-controlled three-phase bridge including a reactor as claimed in any one of claims 1 to 6 for blocking the leakage of noise.

9. Thyristor-controlled three-phase DC motor driving circuitry including a reactor as claimed in any one of claims 1 to 6 for blocking the leakage of noise.

**Fig. 1**

1/5

0012629

**Fig. 2**

# Fig. 3

(a)

Vuv

(b)

Vuv

(c)

Vuv

P

P

# Fig. 4

(a) O  $V_{UV}$

(b) O  $V_{UV}$

(c) O  $V_{UV}$  P  P

## Fig. 5

## Fig. 6

## Fig. 7

Rated current

Phase current ⟶

Inductance L ⟶

# Fig. 8

(a) V_uv

0

(b) I_u

0

# Fig. 9

## DOCUMENTS CONSIDERED TO BE RELEVANT

| Category | Citation of document with indication, where appropriate, of relevant passages | Relevant to claim |
|---|---|---|
| | DE - A - 2 403 114 (LICENTIA)<br>* Page 4, last paragraph; page 5, 1st paragraph *<br>-- | 1 |
| | US - A - 1 876 451 (TELEFUNKEN)<br>* Page 2, lines 22-130; page 3, lines 1-52 *<br>-- | 1-3 |
| | CH - A - 198 526 (G. GLATZ)<br>* Page 1, lines 17-23 of the right-hand column; page 2, left-hand column, line 1 *<br>-- | 1 |
| | US - A - 3 659 191 (WESTINGHOUSE)<br>* Column 4, lines 26-75; column 5, lines 1-75 *<br>-- | 1,3-5 |
| | DE - B - 2 104 117 (CONZ)<br>* Column 4, lines 59-68; column 5; column 6, lines 1-24 *<br>-- | 6-9 |
| | TOUTE L'ELECTRONIQUE, June 1974, Soc. des Editions Radio, Paris FR<br>"L'antiparasitage des thyristors", pages 64-69.<br>* Page 69, left-hand column *<br>-- | 6-9 |
| A | CH - A - 198 506 (G. GLATZ) | |
| A | FR - A - 777 638 (BAUTIER)<br>./. | |

**CLASSIFICATION OF THE APPLICATION (Int. Cl.³)**

H 01 F 37/02
    3/14
    31/06
H 04 B 15/02
H 01 F 27/24

**TECHNICAL FIELDS SEARCHED (Int.Cl.³)**

H 01 F 37/02
H 01 F 3/10
    3/12
    3/14
    27/33
    31/06
    27/24
    29/10
H 02 K 11/00
H 04 B 15/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 13-03-1980 | VANHULLE |

EPO Form 1503.1 06.78

## EUROPEAN SEARCH REPORT

| | European Patent Office | | |

### DOCUMENTS CONSIDERED TO BE RELEVANT

| Category | Citation of document with indication, where appropriate, of relevant passages | Relevant to claim |
|---|---|---|
| A | US - A - 3 699 385 (SYLVANIA) | |
| A | US - A - 3 278 878 (SYLVANIA) | |
| A | GB - A - 1 162 093 (SYLVANIA) | |
| A | US - A - 2 550 501 (GENERAL EL.) | |
| A | US - A - 4 047 138 (GENERAL EL.) | |
| A | DE - B - 1 141 708 (BBC) | |
| A | FR - A - 2 287 129 (SIEMENS) | |

----

CLASSIFICATION OF THE APPLICATION (Int. Cl. 3)

TECHNICAL FIELDS SEARCHED (Int. Cl. 3)